# EUROPÄISCHE PATENTANMELDUNG

(11) **EP 4 810 304 A1**
(43) Veröffentlichungstag der Anmeldung: **23.09.2026**
(21) Anmeldenummer: 25164542.0
(22) Anmeldetag: 18.03.2025
(51) Int. Cl.: B60L 53/18, B60L 53/35, H02G 11/00

(54) **VERSORGUNGSLEITUNGSMANAGEMENTSYSTEM**

(71) Anmelder: Mibag AG, 8833 Samstagern (CH)
(72) Erfinder: Streuli, Bruno, 8833 Samstagern (CH); Streuli, Tobias, 8832 Wilen b. Wollerau (CH); Streuli, Fabian, 8834 Feusisberg (CH)
(74) Vertreter: Keller Schneider Patent- und Markenanwälte AG

(57) **Zusammenfassung**

Ein Versorgungsleitungsmanagementsystem (1) für eine Versorgungsleitung (2, 2a, 2b, 2c, 2d), wobei die Versorgungsleitung (2, 2a, 2b, 2c, 2d) insbesondere als Ladekabel für Elektrofahrzeuge ausgebildet ist, wobei das Versorgungsleitungsmanagementsystem (1) aufweist: 1) ein Führungselement (3), das eine Führungsbahn (6) bereitstellt; 2) ein am Führungselement (3) fest angeordnetes und die Führungsbahn (6) begrenzendes Begrenzungselement (4); 3) ein am Führungselement (3) angeordnetes angetriebenes Verfahrelement (5), wobei das angetriebene Verfahrelement (5) und das Führungselement (3) so ausgebildet sind, dass das angetriebene Verfahrelement (5) entlang der Führungsbahn (6) verfahren werden kann, wobei das Verfahrelement (5) dazu ausgebildet ist, die Versorgungsleitung (2, 2a, 2b, 2c, 2d) in einem Verfahrelementabschnitt (2b) der Versorgungsleitung (2, 2a, 2b, 2c, 2d) zu halten; und 4) mindestens eine zwischen dem fest angeordneten Begrenzungselement (4) und dem Verfahrelement (5) am Führungselement (3) angeordnete und nicht angetriebene Versorgungsleitungshalterung (7), wobei das Verfahrelement (5) und die mindestens eine Versorgungsleitungshalterung (7) durch mindestens ein flexibles Verbindungselement so untereinander verbunden sind, dass ein Verfahren des angetriebenen Verfahrelements (5) entlang der Führungsbahn (6) durch das mindestens eine flexible Verbindungselement in ein gleichgerichtetes Verfahren der mindestens einen nicht angetriebenen Versorgungsleitungshalterung (7) entlang der Führungsbahn (6) überführt wird.

## Beschreibung

### Technisches Gebiet

Die Erfindung betrifft ein Versorgungsleitungsmanagementsystem für eine Versorgungsleitung, insbesondere für ein Ladekabel für Elektrofahrzeuge.

### Stand der Technik

In vielen Anwendungen, beispielsweise beim kabelgebundenen Laden von Elektrofahrzeugen oder beim schlauchgebundenen Zuführen von Kraftstoffen in einen Tank eines Fahrzeugs mit Verbrennungsmotor, sind Vorrichtungen nötig, um Versorgungsleitungen zu verstauen und Nutzenden, beispielsweise Stecker oder Zapfpistolen, der Versorgungsleitungen möglichst effizient an eine gewünschte Einsatzposition zu führen.

In Stand der Technik sind Versorgungsleitungsmanagementsysteme vorgeschlagen worden, die Versorgungsleitungen von oben an eine gewünschte Einsatzposition führen können. Vorteilhafterweise kann ein Fahrzeug somit unterhalb solcher Versorgungsleitungsmanagementsysteme zum Beispiel besser rangiert werden. Sobald ein solches Fahrzeug korrekt unterhalb des Versorgungsleitungsmanagementsystems positioniert ist, kann die Versorgungsleitung vom Versorgungsleitungsmanagementsystem dann abgesenkt werden.

An aus dem Stand der Technik bekannten Versorgungsleitungsmanagementsystemen ist nachteilig, dass diese häufig eine Vielzahl von aktiv angetriebenen Komponenten aufweisen, die zeitlich aufeinander abgestimmt relativ zueinander bewegt werden müssen. Solche Versorgungsleitungsmanagementsysteme sind daher fehleranfällig und im Allgemeinen wenig robust. Weiter ist an aus dem Stand der Technik bekannten Versorgungsleitungsmanagementsystemen nachteilig, dass diese häufig die Versorgungsleitung nicht so führen, dass diese möglichst wenig gebogen beziehungsweise geknickt wird, so dass Versorgungsleitungen aufgrund von Materialermüdung häufig ersetzt werden müssen.

### Darstellung der Erfindung

Aufgabe der Erfindung ist es, ein dem eingangs genannten technischen Gebiet zugehörendes Versorgungsleitungsmanagementsystem zu schaffen, welches zumindest einige Nachteile der aus dem Stand der Technik bekannten Versorgungsleitungsmanagementsysteme überwindet.

Die Lösung der Aufgabe ist durch die Merkmale des Anspruchs 1 definiert. Die Erfindung betrifft ein Versorgungsleitungsmanagementsystem für eine Versorgungsleitung, wobei die Versorgungsleitung insbesondere als Ladekabel für Elektrofahrzeuge ausgebildet ist. Das Versorgungsleitungsmanagementsystem weist auf: 1) ein Führungselement, das eine Führungsbahn bereitstellt; 2) ein am Führungselement fest angeordnetes und die Führungsbahn begrenzendes Begrenzungselement; 3) ein am Führungselement angeordnetes angetriebenes Verfahrelement, wobei das angetriebene Verfahrelement und das Führungselement so ausgebildet sind, dass das angetriebene Verfahrelement entlang der Führungsbahn verfahren werden kann, wobei das Verfahrelement dazu ausgebildet ist, die Versorgungsleitung in einem Verfahrelementabschnitt der Versorgungsleitung zu halten; und 4) mindestens eine zwischen dem fest angeordneten Begrenzungselement und dem Verfahrelement am Führungselement angeordnete und nicht angetriebene Versorgungsleitungshalterung, wobei das Verfahrelement und die mindestens eine Versorgungsleitungshalterung durch mindestens ein flexibles Verbindungselement so untereinander verbunden sind, dass ein Verfahren des angetriebenen Verfahrelements entlang der Führungsbahn durch das mindestens eine flexible Verbindungselement in ein gleichgerichtetes Verfahren der mindestens einen nicht angetriebenen Versorgungsleitungshalterung entlang der Führungsbahn überführt wird.

Die Führungsbahn weist a) einen sich zwischen dem Begrenzungselement und dem Verfahrelement erstreckenden Haltebereich, in dem die mindestens eine Versorgungsleitungshalterung angeordnet ist, b) einen sich zwischen dem Verfahrelement und einem zum Begrenzungselement distalen Ende der Führungsbahn erstreckenden freien Bereich und c) einen Übergangsbereich zwischen dem Haltebereich und dem freien Bereich auf, wobei eine relative Anordnung des Übergangsbereichs der Führungsbahn von einer Positionierung des Verfahrelements entlang der Führungsbahn abhängt, wobei die mindestens eine Versorgungsleitungshalterung dazu ausgebildet ist, die Versorgungsleitung in einem Haltebereichabschnitt der Versorgungsleitung so zu halten, dass sich der Haltebereichabschnitt der Versorgungsleitung im Wesentlichen parallel zur Führungsbahn erstreckt, wobei das Verfahrelement und die mindestens eine Versorgungsleitungshalterung so ausgebildet sind, dass ein Verfahren des Verfahrelements und der mindestens einen Versorgungsleitungshalterung entlang der Führungsbahn das Verfahrelement und die mindestens eine Versorgungsleitungshalterung relativ zur durch das Verfahrelement und die mindestens eine Versorgungsleitungshalterung zumindest teilweise gehaltenen Versorgungsleitung verfährt, und wobei das Verfahrelement und die mindestens eine Versorgungsleitungshalterung so ausgebildet sind, dass durch ein Verfahren des Verfahrelements in Richtung des Begrenzungselements der Haltebereich verkleinert und der freie Bereich vergrössert und dass durch ein Verfahren des Verfahrelements vom Begrenzungselement weg der Haltebereich vergrössert wird und der freie Bereich verkleinert wird.

Das Versorgungsleitungsmanagementsystem kann für unterschiedliche Arten von Versorgungsleitungen vorgesehen sein. Beispielsweise kann das Versorgungsleitungsmanagementsystem für Ladekabel, insbesondere gekühlte Ladekabel, von Elektrofahrzeugen vorgesehen sein oder für Schläuche zur Zuführung von Fluiden, beispielsweise Kraftstoffen für Verbrennungskraftmaschinen.

Das Versorgungsleitungsmanagementsystem ist dazu ausgebildet, die Versorgungsleitung in einem Verfahrelementabschnitt und in einem Haltebereichabschnitt der Versorgungsleitung zu halten. Das Versorgungsleitungsmanagementsystem ist so ausgebildet, dass Ausdehnung und Position des Verfahrelementabschnitt und des Haltebereichabschnitts der Versorgungsleitung abhängig sind von einer Position des Verfahrelements entlang der Führungsbahn, die durch das Führungselement bereitgestellt wird. Da das Versorgungsleitungsmanagementsystem so ausgebildet ist, dass ein Verfahren des angetriebenen Verfahrelements und der mindestens einen nicht angetriebenen Versorgungsleitungshalterung entlang der Führungsbahn das Verfahrelement und die mindestens eine Versorgungsleitungshalterung auch relativ zur Versorgungsleitung verfährt, ändert sich als Folge eines Verfahrens des Verfahrelements und damit der mindestens einen Versorgungsleitungshalterung auch der Verfahrelementabschnitt und der Haltebereichabschnitt der Versorgungsleistung. In Abhängigkeit von der Position des Verfahrelements entlang der Führungsbahn kann der Haltebereichabschnitt dabei unterschiedlich gross sein.

In Bezug auf das Versorgungsleitungsmanagementsystem können die folgenden Abschnitte der Versorgungsleitung definiert wird, die in der angegebenen Reihenfolge aufeinander folgen: 1) ein äusserer Abschnitt der Versorgungsleitung, der bis zum Begrenzungselement reicht; im Falle eines Ladekabels für Elektrofahrzeuge kann dieser äussere Abschnitt beispielsweise von einem Anschluss des Ladekabels an einer Stromversorgung bis zum Begrenzungselement reichen; 2) der Haltebereichabschnitt der Versorgungsleitung, in dem die Versorgungsleitung von der mindestens einen Versorgungsleitungshalterung gehalten wird; 3) der Verfahrelementabschnitt, in dem die Versorgungsleitung vom Verfahrelement gehalten wird; und 4) ein freier Abschnitt, der bis zu einem Nutzende der Versorgungsleitung, im Falle eines Ladekabels beispielsweise bis zu einem Stecker, reicht.

Das Versorgungsleitungsmanagementsystem ist dabei so ausgebildet, dass der freie Abschnitt der Versorgungsleitung vom Versorgungsleitungsmanagementsystem nicht gehalten wird. Durch ein Verfahren des Verfahrelements entlang der Führungsbahn und relativ zur Versorgungsleitung kann der freie Abschnitt der Versorgungsleitung daher entweder vergrössert oder verkleinert werden. Im Hinblick auf den Aufbau des Versorgungsleitungsmanagementsystems führt eine Vergrösserung des freien Abschnitts gleichzeitig zu einer Verkleinerung des Haltebereichabschnitts; eine Verkleinerung des freien Abschnitts führt gleichzeitig zu einer Vergrösserung des Haltebereichabschnitts. Das Versorgungsleitungsmanagementsystem ist vorzugsweise so ausgebildet, dass die Summe aus Haltebereichabschnitt, Verfahrelementabschnitt und freiem Abschnitt unabhängig von der Position des Verfahrelements entlang der Führungsbahn immer gleich gross ist.

Das Versorgungsleitungsmanagementsystem ist vorzugsweise so installiert, dass die Führungsbahn entgegen der Schwerkraftrichtung, in der die Schwerkraft wirkt, von einem Untergrund beabstandet ist. Das Führungselement kann insbesondere an einer Decke eines Gebäudes angeordnet werden. Das Wirken der Schwerkraft kann dann dazu führen, dass der freie Abschnitt der Versorgungsleitung in Richtung des Untergrunds absinkt. Das Versorgungsleitungsmanagementsystem ist dabei vorzugsweise so installiert und die Länge der Versorgungsleitung gebildet aus der Summe von Haltebereichabschnitt, Verfahrelementabschnitt und freiem Abschnitt so ausgewählt, dass das Nutzende der Versorgungsleitung durch Verfahren des Verfahrelements bis zu einer erwünschten Einsatzposition abgesenkt werden kann.

Das Verfahrelement ist vorzugsweise so ausgebildet, dass die Versorgungsleitung während des Verfahrens des Verfahrelements nicht zu stark belastet wird. Vorzugsweise ist das Verfahrelement so ausgebildet, dass die Versorgungsleitung während des Verfahrens des Verfahrelements nicht geknickt wird. Hierdurch kann vorteilhafterweise eine Lebensdauer der Versorgungsleitung verbessert werden.

Das Verfahrelement ist vorzugsweise an die Versorgungsleitung angepasst, für die das Versorgungsleitungsmanagementsystem ausgelegt ist. Eine Versorgungsleitung kann beispielsweise durch einen Biegeradius charakterisiert werden, wobei ein Biegeradius, gemessen zur Innenkrümmung, dem minimalen Radius entsprechen kann, in dem die Versorgungsleitung ohne Knicken oder Beschädigung gebogen werden kann. Versorgungsleitungen mit einem kleinen Biegeradius können daher im Allgemeinen flexibler sein als Versorgungsleitungen mit einem grossen Biegeradius. Das Verfahrelement kann einen gebogenen Führungspfad bereitstellen, entlang dem die Versorgungsleitung im Verfahrelement geführt werden kann und dessen Radius an den Biegeradius der Versorgungsleitung angepasst ist: Falls beispielsweise das Verfahrelement zum Halten der Versorgungsleitung eine Mehrzahl von Lagern aufweist, können die Lager des Verfahrelements vorzugsweise so angeordnet sein, dass durch die Mehrzahl von Lagern der gebogene Führungspfad bereitgestellt wird, dessen Radius an den Biegeradius der Versorgungsleitung angepasst ist. Vorteilhafterweise kann somit ein Verfahrelement bereitgestellt werden, dessen Grösse kleinstmöglich ist im Hinblick auf eine bestimmte Art von Versorgungsleitung. Vorzugsweise kann das Verfahrelement dabei so ausgebildet sein, dass es die Versorgungsleitung vom Führungselement wegführt. Im Falle einer vorgesehenen Befestigung des Versorgungsleitungsmanagementsystems an einer äusseren Struktur, beispielsweise einem Gebäude, kann ein Abstand der Versorgungsleitung am Übergang zwischen dem Haltebereichabschnitt und dem Übergangsbereich zum Untergrund grösser sein als ein Abstand der Versorgungsleitung am Übergang zwischen dem Übergangsbereich und dem freien Bereich zum Untergrund. Mit einem Verfahrelement mit gebogenem Führungspfad kann vorteilhafterweise erreicht werden, dass ein Nutzende der Versorgungsleitung leichter zu einer Einsatzposition, die nahe am Untergrund sein kann, geführt werden kann. Das Versorgungsleitungsmanagementsystem, insbesondere das Führungselement davon, kann vorteilhafterweise relativ zum Untergrund gemessen tiefer montiert werden, womit ein Nutzer des Versorgungsleitungsmanagementsystems eine grössere Flexibilität bei der Handhabung des freien Abschnitts der Versorgungsleitung haben kann, da der Nutzer den freien Abschnitt der Versorgungsleitung teilweise bewegen kann und der freie Abschnitt durch eine tiefe Montage vergrössert sein kann.

Die mindestens eine Versorgungsleitungshalterung und das Verfahrelement sind durch mindestens ein flexibles Verbindungselement, beispielsweise als mindestens ein Seil ausgebildet, untereinander verbunden.

Im Allgemeinen kann die Zahl von Versorgungsleitungshalterungen von der Art von Versorgungsleitung abhängen, für die das Versorgungsleitungsmanagementsystem vorgesehen ist. Die Zahl von Versorgungsleitungshalterungen kann insbesondere vom Biegeradius und Durchmesser der Versorgungsleitung abhängen. Ein grösserer Durchmesser der Versorgungsleitung kann beispielsweise - verglichen mit einer Versorgungsleitung mit kleinerem Durchmesser - mit einer kleineren Zahl von Versorgungsleitungshalterungen einhergehen.

Im Falle einer einzelnen Versorgungsleitungshalterung kann ein einzelnes flexibles Verbindungselement die einzelne Versorgungsleitungshalterung mit dem Verfahrelement verbinden. Das einzelne Verbindungselement kann so ausgebildet sein, dass ein Verfahren des Verfahrelements in Richtung der einzelnen Versorgungsleitungshalterung - ausgehend von einem initialen Zustand, in dem sich das Verfahrelement und die einzelne Versorgungsleitungshalterung nicht berühren -, und damit in Richtung des Begrenzungselements, den Abstand zwischen dem Verfahrelement und der einzelnen Versorgungsleitungshalterung zuerst verkleinert, wobei die einzelne Versorgungsleitungshalterung zunächst noch nicht bewegt wird, bis sich das Verfahrelement und die einzelne Versorgungsleitungshalterung berühren; nach einer solchen Berührung kann das Verfahrelement die einzelne Versorgungsleitungshalterung dann verschieben. Das einzelne Verbindungselement kann so ausgebildet sein, dass ein Verfahren des Verfahrelements weg von der einzelnen Versorgungsleitungshalterung - ausgehend von einem initialen Zustand, in dem sich das Verfahrelement und die einzelne Versorgungsleitungshalterung berühren -, und damit weg vom Begrenzungselement, den Abstand zwischen dem Verfahrelement und der einzelnen Versorgungsleitungshalterung zuerst vergrössert, wobei die einzelne Versorgungsleitungshalterung zunächst noch nicht bewegt wird, bis ein durch das einzelne Verbindungselement vorgegebener maximaler Abstand erreicht ist, wobei der maximale Abstand insbesondere der Länge eines gestrafften Seils als Verbindungselement entsprechen kann; nach Erreichen eines solchen vorgegebenen maximalen Abstands kann das Verfahrelement die einzelne Versorgungsleitungshalterung dann ziehen.

### Falls das Versorgungsleitungsmanagementsystem über mehrere

Versorgungsleitungshalterungen verfügt, können sich benachbarte Versorgungsleitungshalterungen analog zum zuvor beschriebenen Verhalten zwischen dem Verfahrelement und der einzelnen Versorgungsleitungshalterung verhalten. Insbesondere können benachbarte Versorgungsleitungshalterungen jeweils über ein flexibles Verbindungselement miteinander verbunden werden.

Das am Führungselement fest angeordnete Begrenzungselement beschränkt die Führungsbahn, entlang der die mindestens eine Versorgungsleitungshalterung und das Verfahrelement verfahren werden können.

Die mindestens eine Versorgungsleitungshalterung ist so ausgebildet, dass die Versorgungsleitung im Haltebereichabschnitt im Wesentlichen parallel zur Führungsbahn gehalten wird. Jede Versorgungsleitungshalterung kann hierfür laterale Begrenzungen aufweisen, die eine Bewegung der Versorgungsleitung entlang von Richtungen, die nicht parallel zur Führungsbahn ausgerichtet sind, verhindert. Jede Versorgungsleitungshalterung weist vorzugsweise mindestens ein Lager auf, wobei das mindestens eine Lager dazu ausgebildet ist, die Versorgungsleitung zu halten und eine relative Bewegung zwischen der jeweiligen Versorgungsleitungshalterung und der Versorgungsleitung zu ermöglichen. Beispielsweise kann jede Versorgungsleitungshalterung zwei Laufrollen mit jeweils einer Nut aufweisen, wobei die zwei Laufrollen so angeordnet und dimensioniert sind, dass die Versorgungsleitung mit der jeweiligen Nut der zwei Laufrollen in Berührung steht.

Das erfindungsgemässe Versorgungsleitungsmanagementsystem ist daher vorteilhafterweise so ausgebildet, dass die Versorgungsleitung durch das Versorgungsleitungsmanagementsystem möglichst wenig belastet wird, wodurch die Lebensdauer der Versorgungsleitung verlängert werden kann. Aufgrund seines einfachen Aufbaus ist das erfindungsgemässe Versorgungsleitungsmanagementsystem weiterhin robust und wenig fehleranfällig. Vorteilhafterweise muss für einen Betrieb des erfindungsgemässen Versorgungsleitungsmanagementsystems nur das Verfahrelement aktiv angetrieben werden.

In einer Ausführungsform des Versorgungsleitungsmanagementsystems gemäss der Erfindung ist das Führungselement als Führungsschiene ausgebildet.

Vorzugsweise ist die Führungsschiene geradlinig ausgebildet.

In einer weiteren Ausführungsform des Versorgungsleitungsmanagementsystems gemäss der Erfindung ist das Verfahrelement als Gleiter, als Schlitten oder als Roller, insbesondere Führungsrollen aufweisend, ausgebildet.

In einer weiteren Ausführungsform des Versorgungsleitungsmanagementsystems gemäss der Erfindung ist die mindestens eine Versorgungsleitungshalterung jeweils als Gleiter, als Schlitten oder als Roller, insbesondere Führungsrollen aufweisend, ausgebildet.

In einer weiteren Ausführungsform des Versorgungsleitungsmanagementsystems gemäss der Erfindung ist das Begrenzungselement dazu ausgebildet, die Versorgungsleitung zumindest teilweise zu halten.

In einer weiteren Ausführungsform des Versorgungsleitungsmanagementsystems gemäss der Erfindung weist das Begrenzungselement eine Durchführung auf, die so ausgebildet ist, dass die Versorgungsleitung durch die Durchführung geführt werden kann.

In einer weiteren Ausführungsform des Versorgungsleitungsmanagementsystems gemäss der Erfindung weist jede Versorgungsleitungshalterung der mindestens einen Versorgungsleitungshalterung zum Halten der Versorgungsleitung ein jeweiliges Lager, jeweils insbesondere mindestens eine Laufrolle mit Nut umfassend, auf, wobei das jeweilige Lager dazu ausgebildet ist, die Versorgungsleitung zumindest teilweise zu halten und eine relative Bewegung zwischen der Versorgungsleitungshalterung und der Versorgungsleitung zu ermöglichen.

In einer weiteren Ausführungsform des Versorgungsleitungsmanagementsystems gemäss der Erfindung weist das Versorgungsleitungsmanagementsystem mindestens zwei Versorgungsleitungshalterungen auf und ist so ausgebildet, dass, wenn das Verfahrelement weg vom Begrenzungselement verfahren wird, die mindestens zwei Versorgungsleitungshalterungen auseinanderbewegt werden um definierte Abstände, insbesondere gleichmässige, zueinander einzunehmen, und wobei das Versorgungsleitungsmanagementsystem so ausgebildet ist, dass, wenn das Verfahrelement in Richtung des Begrenzungselements verfahren wird, die mindestens zwei Versorgungsleitungshalterungen zusammengeschoben werden.

In einer weiteren Ausführungsform des Versorgungsleitungsmanagementsystems gemäss der Erfindung ist das mindestens eine flexible Verbindungselement als ein oder mehrere Seile ausgebildet.

In einer weiteren Ausführungsform des Versorgungsleitungsmanagementsystems gemäss der Erfindung weist das Verfahrelement zum Halten der Versorgungsleitung mindestens ein Lager, wobei jedes Lager insbesondere mindestens eine Laufrolle mit Nut umfasst, auf, wobei das mindestens eine Lager dazu ausgebildet ist, die Versorgungsleitung zumindest teilweise zu halten und eine relative Bewegung zwischen dem Verfahrelement und der Versorgungsleitung zu ermöglichen.

In einer weiteren Ausführungsform des Versorgungsleitungsmanagementsystems gemäss der Erfindung weist das Versorgungsleitungsmanagementsystem eine Antriebseinheit auf, die dazu ausgebildet ist, das Verfahrelement entlang der Führungsbahn zu verfahren.

Die Antriebseinheit kann separat vom Verfahrelement angeordnet sein und das Verfahrelement mittelbar oder unmittelbar entlang der Führungsbahn verfahren. Alternativ kann die Antriebseinheit auch im Verfahrelement angeordnet sein und Teil des Verfahrelements sein.

Die Erfindung betrifft auch eine Versorgungsleitungsmanagementinstallation, aufweisend ein Versorgungsleitungsmanagementsystem gemäss der Erfindung und eine Versorgungsleitung, insbesondere ausgebildet als Ladekabel für Elektrofahrzeuge, mit einem Nutzende, insbesondere ausgebildet als Stecker, wobei das Versorgungsleitungsmanagementsystem so an einer äusseren Struktur, insbesondere einem Gebäude, installiert ist, dass die Führungsbahn entgegen einer Schwerkraftwirkrichtung, in der die Schwerkraft wirkt, von einem Untergrund beabstandet ist, und wobei das Versorgungsleitungsmanagementsystem so an der äusseren Struktur installiert ist, dass das Nutzende der Versorgungsleitung durch ein Verfahren des Verfahrelements weg vom Begrenzungselement entgegen der Schwerkraftwirkrichtung bewegt wird und dass das Nutzende der Versorgungsleitung durch ein Verfahren des Verfahrelements in Richtung des Begrenzungselements durch das Wirken der Schwerkraft entlang der Schwerkraftwirkrichtung in Richtung des Untergrunds absinkt.

In einer Ausführungsform der Versorgungsleitungsmanagementinstallation gemäss der Erfindung ist die Versorgungsleitungsmanagementinstallation als Ladekabelmanagementinstallation ausgebildet, wobei die Versorgungsleitung als Ladekabel für Elektrofahrzeuge ausgebildet ist und wobei das Nutzende des Ladekabels als Stecker ausgebildet ist, wobei durch ein entsprechendes Verfahren des Verfahrelements der Stecker in Richtung des Untergrunds abgesenkt oder vom Untergrund hochgehoben werden kann.

In einer weiteren Ausführungsform der Versorgungsleitungsmanagementinstallation gemäss der Erfindung ist das Führungselement als gerade Führungsschiene ausgebildet, die orthogonal zur Schwerkraftrichtung und zum Untergrund beabstandet an der äusseren Struktur angeordnet ist.

In einer weiteren Ausführungsform der Versorgungsleitungsmanagementinstallation gemäss der Erfindung weist die Versorgungsleitungsmanagementinstallation eine Kontrolleinheit auf, wobei die Kontrolleinheit so ausgebildet ist, dass sie das Verfahren des Verfahrelements entlang der Führungsbahn steuern kann.

Instruktionen können an die Kontrolleinheit zum Beispiel über eine Applikation, die auf einem Mobiltelefon installiert ist, gesendet werden. Die Kontrolleinheit kann aber zum Beispiel auch oder alternativ über einen mechanischen Schalter oder Drehregler verfügen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
Fig. 1 zeigt eine perspektivische Ansicht eines Teils eines Versorgungsleitungsmanagementsystems mit Versorgungsleitung;
Fig. 2 zeigt unterschiedliche Ansichten des Versorgungsleitungsmanagementsystems mit Versorgungsleitung gemäss Fig. 1 in einem eingeholten Zustand; und
Fig. 3 zeigt unterschiedliche Ansichten des Versorgungsleitungsmanagementsystems mit Versorgungsleitung gemäss Fig. 1 in einem ausgefahrenen Zustand.

Grundsätzlich sind in den Figuren gleiche Teile mit gleichen Bezugszeichen versehen.

### Wege zur Ausführung der Erfindung

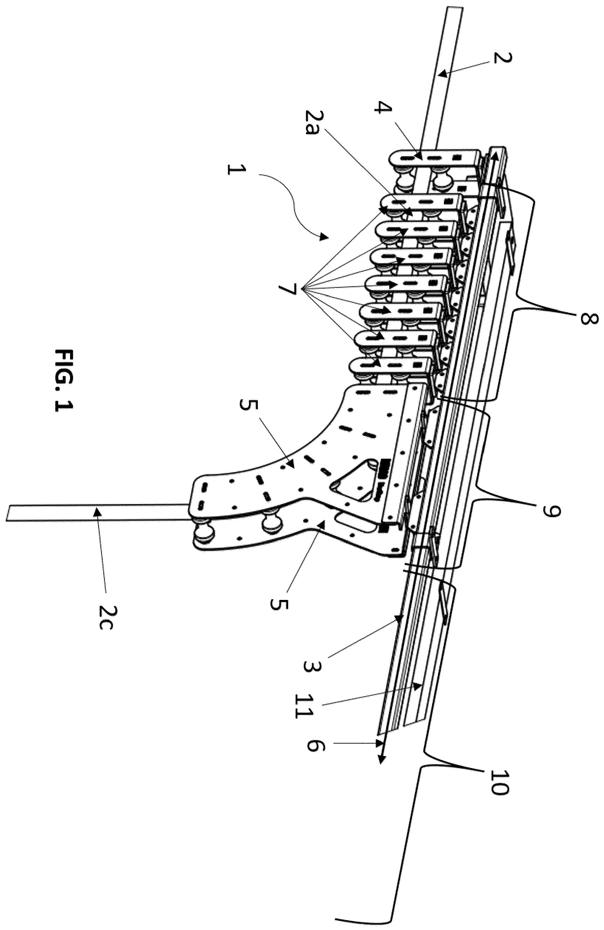

Fig. 1 zeigt eine perspektivische Ansicht eines Teils eines Versorgungsleitungsmanagementsystems 1 mit Versorgungsleitung 2. In dem in Fig. 1 gezeigten Ausschnitt des Versorgungsleitungsmanagementsystems 1 ist das Führungselement 3, das in Fig. 1 als Führungsschiene ausgebildet ist, teilweise abgeschnitten.

Das Versorgungsleitungsmanagementsystem 1 umfasst ein Führungselement 3, das eine Führungsbahn 6 bereitstellt. Am Führungselement 3 ist ein Begrenzungselement 4 fest angeordnet. Weiter umfasst das Versorgungsleitungsmanagementsystem 1 eine Mehrzahl von Versorgungsleitungshalterungen 7, im vorliegenden Beispiel sieben Versorgungsleitungshalterungen 7, die am Führungselement 3 angeordnet sind. Die Versorgungsleitungshalterungen 7 sind nicht angetrieben, können allerdings entlang der Führungsbahn 6 verfahren werden. Die Versorgungsleitungshalterungen 7 weisen jeweils zwei Laufrollen mit Nut auf, zwischen denen die Versorgungsleitung 2, genauer der Haltebereichabschnitt 2a der Versorgungsleitung 2, verläuft. Ein Verfahren der Versorgungsleitungshalterungen 7 entlang der Führungsbahn 6 führt daher auch zu einem Verfahren der Versorgungsleitungshalterungen 7 gegenüber der Versorgungsleitung 2. Die Versorgungsleitungshalterungen 7 sind so ausgebildet, dass der Haltebereichabschnitt 2a der Versorgungsleitung 2 im Wesentlichen geradlinig und parallel zur Führungsbahn 6 ausgerichtet ist.

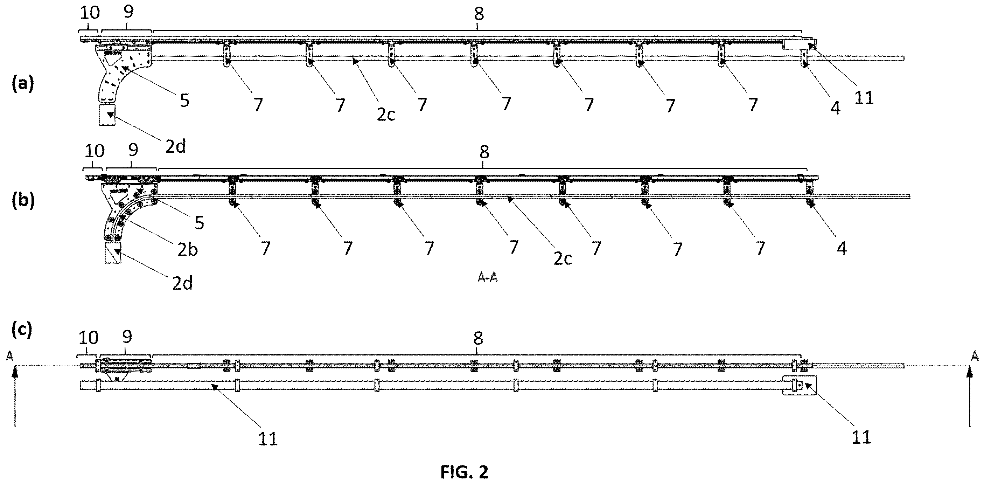

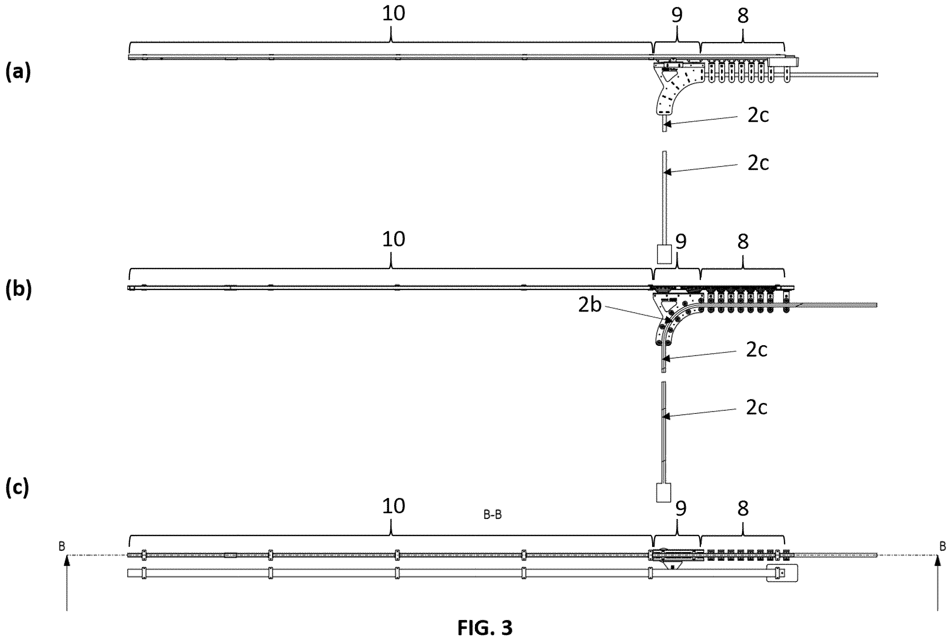

Als aktiv angetriebenes Element umfasst das Versorgungsleitungsmanagementsystem 1 ein Verfahrelement 5, das entlang der Führungsbahn 6 verfahren werden kann. In Fig. 1 ist ausschnittweise ein Teil einer Antriebseinheit 11 zu sehen, die das Verfahrelement 5 aktiv antreiben und entlang der Führungsbahn 6 verfahren kann. Wie teilweise in Fig. 1 und besser in Fig. 2b und Fig. 3b sichtbar, umfasst das Verfahrelement 5 - wie die Versorgungsleitungshalterungen 7 - gegenüberliegende Laufrollen mit Nut, zwischen denen die Versorgungsleitung 2, genauer der Verfahrelementabschnitt 2b der Versorgungsleitung 2, verläuft. Das Verfahrelement 5 ist so geformt, dass ein Radius eines Führungspfads, der zwischen den gegenüberliegenden Laufrollen verläuft und durch den die Versorgungsleitung geführt ist, einem Biegeradius der Versorgungsleitung 2 entspricht. Vorzugsweise kann damit ein Knicken oder Brechen der Versorgungsleitung 2 verhindert werden, wenn die Versorgungsleitung 2 durch ein Verfahren des Verfahrelements 5 abgesenkt beziehungsweise gehoben wird. Der freie Abschnitt 2c der Versorgungsleitung 2 wird nicht vom Versorgungsleitungsmanagementsystem 1 gehalten und sinkt daher von sich aus in Richtung eines Untergrunds aufgrund des Wirkens der Schwerkraft.

Wie in Fig. 1 gezeigt, kann die Führungsbahn 6 in einen Haltebereich 8, einen Übergangsbereich 9 und einen freien Bereich 10 konzeptionell zerlegt werden. Der Haltebereich 8 ist dadurch gekennzeichnet, dass in diesem die Versorgungsleitungshalterungen 7 angeordnet sind der Übergangsbereich 9 dadurch, dass in diesem das Verfahrelement 5 angeordnet ist. Da das Verfahrelement 5 und die Versorgungsleitungshalterungen 7 entlang der Führungsbahn 6 verfahren werden können, sind die Ausmasse des Haltebereichs 8 und des freien Bereichs 10 variabel.

Falls das Verfahrelement 5 nahe dem Begrenzungselement 4 ist, sind die Versorgungsleitungshalterungen 7, wie in Fig. 1 sichtbar, eng beieinander. Die Versorgungsleitungshalterungen 7 sind dabei untereinander und mit dem Verfahrelement über flexible Verbindungselemente, insbesondere Seile, verbunden (nicht sichtbar in Fig. 1). Die flexiblen Verbindungselemente sind dabei so ausgebildet, dass sowohl ein Minimalabstand zwischen benachbarten Versorgungsleitungshalterungen 7, wie in Fig. 1 sichtbar, als auch ein Maximalabstand zwischen benachbarten Versorgungsleitungshalterungen 7 existiert. Dieser Maximalabstand gibt daher, zusammen mit der vorhandenen Zahl von Versorgungsleitungshalterungen 7, die grösstmögliche Ausdehnung des Haltebereichs 8 vor.

Beim Verfahren des Verfahrelements 5 in Richtung des Begrenzungselements 4 werden die Versorgungsleitungshalterungen 7 damit der Reihe nach in Richtung des Begrenzungselements 4 geschoben, und beim Verfahren des Verfahrelements 5 weg vom Begrenzungselement 4 werden die Versorgungsleitungshalterungen 7 weg vom Begrenzungselement 4 durch die Vermittlung der flexiblen Verbindungselemente gezogen. Da sowohl das Verfahrelement 5 als auch die Versorgungsleitungshalterungen 7 auch relativ zur Versorgungsleitung 2 verfahren werden, ist der freie Abschnitt 2c der Versorgungsleitung 2 je nach Position des Verfahrelements 5 entlang der Führungsbahn 6 grösser oder kleiner.

In Fig. 2 sind unterschiedliche Ansichten des Versorgungsleitungsmanagementsystems 1 mit Versorgungsleitung 2 gemäss Fig. 1 in einem eingeholten Zustand sichtbar. Fig. 2c zeigt dabei eine Ansicht von oben auf das Versorgungsleitungsmanagementsystems 1, Fig. 2b eine Schnittansicht durch das Versorgungsleitungsmanagementsystems 1 entlang der in Fig. 2c eingezeichneten Schnittebene und Fig. 2a eine Ansicht von der Seite auf das Versorgungsleitungsmanagementsystems 1. Im dargestellten eingeholten Zustand ist das Verfahrelement 5, die flexiblen Verbindungselemente und die Anzahl Versorgungsleitungshalterungen 7 berücksichtigend, maximal vom Begrenzungselement 4 beabstandet und der Haltebereich 8 damit maximiert. Folglich ist der freie Bereich 10 klein. Die Versorgungsleitung 2 befindet sich daher überwiegend im Haltebereich 8, so dass der Haltebereichsabschnitt 2a der Versorgungsleitung 2 deutlich grösser ist als der freie Abschnitt der Versorgungsleitung 2. Ein Nutzende 2d der Versorgungsleitung 2 befindet sich in unmittelbarer Nähe zum Verfahrelement 5.

In Fig. 3 sind unterschiedliche Ansichten des Versorgungsleitungsmanagementsystems 1 mit Versorgungsleitung 2 gemäss Fig. 1 in einem ausgefahrenen Zustand sichtbar. Fig. 3c zeigt dabei eine Ansicht von oben auf das Versorgungsleitungsmanagementsystems 1, Fig. 3b eine Schnittansicht durch das Versorgungsleitungsmanagementsystems 1 entlang der in Fig. 3c eingezeichneten Schnittebene und Fig. 3a eine Ansicht von der Seite auf das Versorgungsleitungsmanagementsystems 1. Im dargestellten ausgefahrenen Zustand ist das Verfahrelement 5, die flexiblen Verbindungselemente und die Anzahl Versorgungsleitungshalterungen berücksichtigend, so nah wie möglich am Begrenzungselement 4 und der Haltebereich 8 damit minimiert. Folglich ist der freie Bereich 10 gross. Der freie Abschnitt 2c der Versorgungsleitung ist daher deutlich länger als der Haltebereichabschnitt der Versorgungsleitung, so dass der freie Abschnitt 2c der Versorgungsleitung durch das Wirken der Schwerkraft absinkt.

## Patentansprüche

1. Versorgungsleitungsmanagementsystem (1) für eine Versorgungsleitung (2, 2a, 2b, 2c, 2d), wobei die Versorgungsleitung (2, 2a, 2b, 2c, 2d) insbesondere als Ladekabel für Elektrofahrzeuge ausgebildet ist, wobei das Versorgungsleitungsmanagementsystem (1) aufweist:
1) ein Führungselement (3), das eine Führungsbahn (6) bereitstellt,
2) ein am Führungselement (3) fest angeordnetes und die Führungsbahn (6) begrenzendes Begrenzungselement (4),
3) ein am Führungselement (3) angeordnetes angetriebenes Verfahrelement (5), wobei das angetriebene Verfahrelement (5) und das Führungselement (3) so ausgebildet sind, dass das angetriebene Verfahrelement (5) entlang der Führungsbahn (6) verfahren werden kann, wobei das Verfahrelement (5) dazu ausgebildet ist, die Versorgungsleitung (2, 2a, 2b, 2c, 2d) in einem Verfahrelementabschnitt (2b) der Versorgungsleitung (2, 2a, 2b, 2c, 2d) zu halten, und
4) mindestens eine zwischen dem fest angeordneten Begrenzungselement (4) und dem Verfahrelement (5) am Führungselement (3) angeordnete und nicht angetriebene Versorgungsleitungshalterung (7), wobei das Verfahrelement (5) und die mindestens eine Versorgungsleitungshalterung (7) durch mindestens ein flexibles Verbindungselement so untereinander verbunden sind, dass ein Verfahren des angetriebenen Verfahrelements (5) entlang der Führungsbahn (6) durch das mindestens eine flexible Verbindungselement in ein gleichgerichtetes Verfahren der mindestens einen nicht angetriebenen Versorgungsleitungshalterung (7) entlang der Führungsbahn (6) überführt wird,
wobei die Führungsbahn (6) a) einen sich zwischen dem Begrenzungselement (4) und dem Verfahrelement (5) erstreckenden Haltebereich (8), in dem die mindestens eine Versorgungsleitungshalterung (7) angeordnet ist, b) einen sich zwischen dem Verfahrelement (5) und einem zum Begrenzungselement (4) distalen Ende der Führungsbahn (6) erstreckenden freien Bereich (10) und c) einen Übergangsbereich (9) zwischen dem Haltebereich (8) und dem freien Bereich (10) aufweist, wobei eine relative Anordnung des Übergangsbereichs (9) der Führungsbahn (6) von einer Positionierung des Verfahrelements (5) entlang der Führungsbahn (6) abhängt, wobei die mindestens eine Versorgungsleitungshalterung (7) dazu ausgebildet ist, die Versorgungsleitung (2, 2a, 2b, 2c, 2d) in einem Haltebereichabschnitt (2a) der Versorgungsleitung (2, 2a, 2b, 2c, 2d) so zu halten, dass sich der Haltebereichabschnitt (2a) der Versorgungsleitung (2, 2a, 2b, 2c, 2d) im Wesentlichen parallel zur Führungsbahn (6) erstreckt, wobei das Verfahrelement (5) und die mindestens eine Versorgungsleitungshalterung (7) so ausgebildet sind, dass ein Verfahren des Verfahrelements (5) und der mindestens einen Versorgungsleitungshalterung (7) entlang der Führungsbahn (5) das Verfahrelement (5) und die mindestens eine Versorgungsleitungshalterung (7) relativ zur durch das Verfahrelement (5) und die mindestens eine Versorgungsleitungshalterung (7) zumindest teilweise gehaltenen Versorgungsleitung (2, 2a, 2b, 2c, 2d) verfährt, und wobei das Verfahrelement (5) und die mindestens eine Versorgungsleitungshalterung (7) so ausgebildet sind, dass durch ein Verfahren des Verfahrelements (5) in Richtung des Begrenzungselements (4) der Haltebereich (8) verkleinert und der freie Bereich (10) vergrössert und dass durch ein Verfahren des Verfahrelements (5) vom Begrenzungselement (4) weg der Haltebereich (8) vergrössert und der freie Bereich (10) verkleinert wird.

2. Versorgungsleitungsmanagementsystem (1) gemäss Anspruch 1, wobei das Führungselement (3) als Führungsschiene ausgebildet ist.

3. Versorgungsleitungsmanagementsystem (1) gemäss Anspruch 2, wobei das Verfahrelement (5) als Gleiter, als Schlitten oder als Roller, insbesondere Führungsrollen aufweisend, ausgebildet ist.

4. Versorgungsleitungsmanagementsystem (1) gemäss Anspruch 2 oder 3, wobei die mindestens eine Versorgungsleitungshalterung (7) jeweils als Gleiter, als Schlitten oder als Roller, insbesondere Führungsrollen aufweisend, ausgebildet ist.

5. Versorgungsleitungsmanagementsystem (1) gemäss einem der vorherigen Ansprüche, wobei das Begrenzungselement (4) dazu ausgebildet ist, die Versorgungsleitung (2, 2a, 2b, 2c, 2d) zumindest teilweise zu halten.

6. Versorgungsleitungsmanagementsystem (1) gemäss Anspruch 5, wobei das Begrenzungselement (4) eine Durchführung aufweist, die so ausgebildet ist, dass die Versorgungsleitung (2, 2a, 2b, 2c, 2d) durch die Durchführung geführt werden kann.

7. Versorgungsleitungsmanagementsystem (1) gemäss einem der vorherigen Ansprüche, wobei jede Versorgungsleitungshalterung (7) der mindestens einen Versorgungsleitungshalterung (7) zum Halten der Versorgungsleitung (2, 2a, 2b, 2c, 2d) ein jeweiliges Lager, jeweils insbesondere mindestens eine Laufrolle mit Nut umfassend, aufweist, wobei das jeweilige Lager dazu ausgebildet ist, die Versorgungsleitung (2, 2a, 2b, 2c, 2d) zumindest teilweise zu halten und eine relative Bewegung zwischen der Versorgungsleitungshalterung (7) und der Versorgungsleitung (2, 2a, 2b, 2c, 2d) zu ermöglichen.

8. Versorgungsleitungsmanagementsystem (1) gemäss einem der vorherigen Ansprüche, wobei das Versorgungsleitungsmanagementsystem (1) mindestens zwei Versorgungsleitungshalterungen (7) aufweist und so ausgebildet ist, dass, wenn das Verfahrelement (5) weg vom Begrenzungselement (4) verfahren wird, die mindestens zwei Versorgungsleitungshalterungen (7) auseinanderbewegt werden um definierte Abstände, insbesondere gleichmässige, zueinander einzunehmen, und wobei das Versorgungsleitungsmanagementsystem (1) so ausgebildet ist, dass, wenn das Verfahrelement (5) in Richtung des Begrenzungselements (4) verfahren wird, die mindestens zwei Versorgungsleitungshalterungen (7) zusammengeschoben werden.

9. Versorgungsleitungsmanagementsystem (1) gemäss einem der vorherigen Ansprüche, wobei das mindestens eine flexible Verbindungselement als ein oder mehrere Seile ausgebildet ist.

10. Versorgungsleitungsmanagementsystem (1) gemäss einem der vorherigen Ansprüche, wobei das Verfahrelement (5) zum Halten der Versorgungsleitung (2, 2a, 2b, 2c, 2d) mindestens ein Lager, wobei jedes Lager insbesondere mindestens eine Laufrolle mit Nut umfasst, aufweist, wobei das mindestens eine Lager dazu ausgebildet ist, die Versorgungsleitung (2, 2a, 2b, 2c, 2d) zumindest teilweise zu halten und eine relative Bewegung zwischen dem Verfahrelement (5) und der Versorgungsleitung (2, 2a, 2b, 2c, 2d) zu ermöglichen.

11. Versorgungsleitungsmanagementsystem (1) gemäss einem der vorherigen Ansprüche, wobei das Versorgungsleitungsmanagementsystem (1) eine Antriebseinheit (11) aufweist, die dazu ausgebildet ist, das Verfahrelement (5) entlang der Führungsbahn (6) zu verfahren.

12. Versorgungsleitungsmanagementinstallation, aufweisend ein Versorgungsleitungsmanagementsystem (1) gemäss einem der vorherigen Ansprüche und eine Versorgungsleitung (2, 2a, 2b, 2c, 2d), insbesondere ausgebildet als Ladekabel für Elektrofahrzeuge, mit einem Nutzende (2d), insbesondere ausgebildet als Stecker, wobei das Versorgungsleitungsmanagementsystem (1) so an einer äusseren Struktur, insbesondere einem Gebäude, installiert ist, dass die Führungsbahn (6) entgegen einer Schwerkraftwirkrichtung, in der die Schwerkraft wirkt, von einem Untergrund beabstandet ist, und wobei das Versorgungsleitungsmanagementsystem (1) so an der äusseren Struktur installiert ist, dass das Nutzende (2d) der Versorgungsleitung (2, 2a, 2b, 2c, 2d) durch ein Verfahren des Verfahrelements (5) weg vom Begrenzungselement (4) entgegen der Schwerkraftwirkrichtung bewegt wird und dass das Nutzende (2d) der Versorgungsleitung (2, 2a, 2b, 2c, 2d) durch ein Verfahren des Verfahrelements (5) in Richtung des Begrenzungselements (4) durch das Wirken der Schwerkraft entlang der Schwerkraftwirkrichtung in Richtung des Untergrunds absinkt.

13. Versorgungsleitungsmanagementinstallation gemäss Anspruch 12, ausgebildet als Ladekabelmanagementinstallation, wobei die Versorgungsleitung (2, 2a, 2b, 2c, 2d) als Ladekabel für Elektrofahrzeuge ausgebildet ist und wobei das Nutzende (2d) des Ladekabels als Stecker ausgebildet ist, wobei durch ein entsprechendes Verfahren des Verfahrelements (5) der Stecker (2d) in Richtung des Untergrunds abgesenkt oder vom Untergrund hochgehoben werden kann.

14. Versorgungsleitungsmanagementinstallation gemäss Anspruch 12 oder 13, wobei das Führungselement (3) als gerade Führungsschiene ausgebildet ist, die orthogonal zur Schwerkraftrichtung und zum Untergrund beabstandet an der äusseren Struktur angeordnet ist.

15. Versorgungsleitungsmanagementinstallation gemäss Anspruch 12, 13 oder 14, wobei das Versorgungsleitungsmanagementinstallation eine Kontrolleinheit aufweist, wobei die Kontrolleinheit so ausgebildet ist, dass sie das Verfahren des Verfahrelements (5) entlang der Führungsbahn (6) steuern kann.
